# EUROPEAN PATENT SPECIFICATION

(11) **EP 3 802 699 B1**
(45) Date of publication and mention of the grant of the patent: **11.05.2022**
(21) Application number: 19728078.7
(22) Date of filing: 06.06.2019
(51) Int. Cl.: C08L 63/00, C09D 163/00

(54) **PARTICULATE COATING COMPOSITION**
PARTIKELBESCHICHTUNGSZUSAMMENSETZUNG
COMPOSITION DE REVETEMENT PARTICULAIRE

(30) Priority: 06.06.2018 EP 18176346
(43) Date of publication of application: 14.04.2021
(73) Proprietor: Jotun A/S, 3202 Sandefjord (NO)
(72) Inventor: OWE, Lars-Erik, 3209 Sandefjord (NO); JACOB, Shibu, Hor Al Anz East, Dubai (AE); MITROKHIN, Maxim, 3234 Sandefjord (NO)
(74) Representative: Gordon, Kirsteen Helen
(86) International application number: PCT/EP2019/064756
(87) International publication number: WO 2019/234139

(56) References cited:
- WO-A1-2011/110089
- WO-A1-2017/106269
- US-A- 5 686 185
- US-A1- 2012 112 136

## Description

### INTRODUCTION

The present invention relates to a particulate coating composition, and preferably a powder coating composition, comprising: (i) at least one epoxy resin; (ii) at least one curing agent; (iii) at least one organosilane adhesion promoter; and (iv) 0.5-9.0 wt% metal flakes, wherein the metal flakes are selected from zinc flakes, aluminium flakes, stainless steel flakes, magnesium flakes or mixtures thereof. The invention also relates to a container containing the composition and to a method for making the composition. Additionally the invention relates to a coating comprising the composition, a substrate coated with the composition and to methods of coating a substrate with the composition.

### BACKGROUND

Pipeline coatings are applied to pipelines to protect pipelines from corrosion and increase their service life span. The coating should be able to resist damage during transportation and storage of pipes as well as during installation and operation of the pipeline so corrosion resistance is maintained. The coating should have sufficient flexibility to withstand damage during bending in the pipeline installation process.

Damage to the coating can ultimately lead to compromised resistance to corrosion. In many pipelines cathodic protection is provided by impressing a direct current into the steel pipe or by attaching a sacrificial anode to the steel pipe. Cathodic protection provides corrosion protection of the steel pipe when the coating integrity is compromised by damage, imperfections or "holidays". However, the chemical environment created in holidays may cause coating disbondment (loss of adhesion to the steel pipe) around the area of the holiday. The temperature of the contents of the pipeline, which may be up to 200 °C, may also contribute to disbondment of the coating.

Pipeline coatings are required to be:
- Resistant to high temperatures and moisture;
- Resistant to cathodic disbondment; and
- Flexible to withstand bending during installation.

It is important that pipeline coatings retain their resistance to hot water and cathodic disbondment for prolonged periods of time to ensure pipelines have a desirable service life.

An example of a pipeline coating is disclosed in US 5,686,185. WO2017/106269 and WO2011/110089 disclose powder coating compositions, but not for preparation of pipeline coatings.

### SUMMARY OF THE INVENTION

Viewed from a first aspect, the present invention provides a particulate coating composition, and preferably a powder coating composition, comprising:
(i) at least one epoxy resin;
(ii) at least one curing agent;
(iii) at least one organosilane adhesion promoter; and
(iv) 0.5-9.0 wt% metal flakes, wherein said metal flakes are selected from zinc flakes, aluminium flakes, stainless steel flakes, magnesium flakes or mixtures thereof.

Viewed from a further aspect, the present invention provides a container containing a particulate coating composition as hereinbefore described.

Viewed from a further aspect, the present invention provides a kit comprising:
(i) a first container containing at least one epoxy resin, at least one curing agent and at least one organosilane adhesion promoter;
(ii) a second container containing 0.5-9.0 wt% of metal flakes selected from zinc flakes, aluminium flakes, stainless steel flakes, magnesium flakes or mixtures thereof, based on the total weight of the contents of the containers of the kit; and
(iii) instructions for mixing at least one epoxy resin, at least one curing agent, at least one organosilane adhesion promoter and metal flakes.

Viewed from a further aspect, the present invention provides a process for preparing a particulate coating composition as hereinbefore described comprising:
(i) blending at least one epoxy resin, at least one curing agent, at least one organosilane adhesion promoter and 0.5-9.0 wt% of metal flakes selected from zinc flakes, aluminium flakes, stainless steel flakes, magnesium flakes or mixtures thereof based on the total weight of the composition, to form a mixture; and
(ii) extruding said mixture to form particles.

Viewed from a further aspect, the present invention provides a coating, preferably a cured coating, comprising a particulate coating composition as hereinbefore described.

Viewed from a further aspect, the present invention provides a coating obtainable by spraying and curing a particulate coating composition as hereinbefore described.

Viewed from a further aspect, the present invention provides a substrate, preferably a metal substrate, coated with a particulate coating composition or a coating as hereinbefore described.

Viewed from a further aspect, the present invention provides a method for coating a substrate, preferably a metal substrate, with a particulate coating composition as hereinbefore described, comprising:
i) applying said particulate coating composition to said substrate; and
ii) curing said particulate coating composition.

Viewed from a further aspect, the present invention provides the use of a particulate coating composition as hereinbefore described to coat a substrate, preferably a metal substrate.

### DEFINITIONS

As used herein the term "particulate coating composition" refers to a mixture of solid particles which when applied to a surface and heated, e.g. cured, forms a coating thereon. A preferred particulate coating composition is a powder coating composition.

As used herein the term "powder coating composition" refers to dry, free flowing powder which when applied to a surface and heated, e.g. cured, forms a coating thereon. Typically the particles that constitute the powder have an average diameter of 10-120 µm.

As used herein, the term "epoxy resin" refers to a polymer or oligomer formed from epoxy-containing monomers. Often the epoxy resin will comprise at least some epoxy groups. The term epoxy is used interchangeably with epoxide.

As used herein the term "solid epoxy resin" refers to a polymer that is solid at 20 °C.

As used herein the term "liquid epoxy resin" refers to a polymer that is liquid at 20 °C.

As used herein the term "epoxy" refers to a three-atom cyclic ether.

As used herein the term "epoxy binder system" refers to the combination of the epoxy resin(s) and curing agent(s). The epoxy binder system does not include the curing accelerator.

As used herein, the phrase "equivalent epoxy weight" or "EEW" refers to the number of epoxide equivalents in 1 kg of resin. It is measured by ASTM D-1652

As used herein the term "curing agent" refers to a compound which, when mixed with the epoxy resin, produces a cured or hardened coating by generating crosslinks within the polymer. Sometimes curing agents are referred to as hardeners.

As used herein the terms "curing accelerator" and "accelerator" are used synonymously and refer to compounds which increase the rate of the curing reaction to cure or harden the coating.

As used herein the term "flake" refers to physical form which has a significantly smaller thickness (e.g. at least 5 times less) compared to its diameter.

As used herein the term "adhesion promoter" refers to a compound which improves the adhesion of the coating to a target substrate, and in particular a metal substrate.

As used herein the term "organosilane" refers to a compound comprising at least one Si-C bond.

As used herein the term "alkyl" refers to saturated, aliphatic, straight chained, branched or cyclic groups. Alkyl groups may be substituted or unsubstituted.

As used herein the term "alkoxy" refers to a O-alkyl group.

As used herein the term "ether" refers to group comprising a R-O-R linkage, wherein R is alkyl or alkylene.

As used herein the term "molecular weight" refers to weight average molecular weight (Mw), unless otherwise specified.

### DETAILED DESCRIPTION OF THE INVENTION

The present invention relates to a particulate coating composition, and preferably a powder coating composition, comprising at least 4 components. The components are:
(i) at least one epoxy resin;
(ii) at least one curing agent;
(iii) at least one organosilane adhesion promoter; and
(iv) 0.5-9.0 wt% metal flakes, wherein the metal flakes are selected from zinc flakes, aluminium flakes, stainless steel flakes, magnesium flakes or mixtures thereof.

Preferably the particulate coating composition further comprises (v) a curing accelerator.

Optionally the particulate coating composition of the present invention further comprises: (vi) filler; (vii) colour pigment; (viii) flow agent; and/or (ix) additives.

The coating composition of the present invention is a fusible composition that melts and cures on application of heat to form a coating film. Such coatings are often referred to in the art as fusion bonded epoxy (FBE) coatings.

Advantageously the particulate coating composition of the present invention has improved resistance to hot water exposure as well as improved cathodic disbondment resistance compared to conventional particulate coating compositions. This means that pipelines coated with the coatings of the invention are less prone to corrosion even if holidays exist and/or if the pipeline is used to transport high temperature fluids.

### Epoxy resin

The particulate coating composition of the present invention comprises an epoxy resin. The epoxy resin is preferably a solid epoxy resin.

Preferred epoxy resins present in the coating compositions of the present invention have an equivalent epoxy weight (EEW) of 300-2000 g/eq, more preferably 350 to 1500 g/eq, still more preferably 360-1000 g/eq and yet more preferably 500-1000 g/eq.

There are two main categories of epoxy resins, glycidyl epoxy resins and non-glycidyl epoxy resins. Some classes of glycidyl epoxy resins include glycidyl-ether epoxy resins, glycidyl-ester epoxy resins and glycidyl-amine epoxy resins. Some classes of non-glycidyl epoxy resins include aliphatic epoxy resin and cycloaliphatic epoxy resin.

Preferably the solid epoxy resin present in the particulate coating compositions of the present invention comprises a glycidyl epoxy resin and more preferably a glycidyl-ether epoxy resin. Glycidyl-ether epoxy resins are generally prepared via a condensation reaction of a dihydroxy compound and epichlorohydrin. Preferably the dihydroxy compound is a bisphenol compound.

Representative examples of solid epoxy resins suitable for use in the compositions of the invention include bisphenol A based epoxy resins, bisphenol F based epoxy resins, bisphenol AF based epoxy resins, novolac-modified bisphenol A based epoxy resin, novolac-modified bisphenol F based epoxy resins, novolac-modified bisphenol AF based epoxy resin, isocyanate-modified bisphenol A based epoxy resin, isocyanate-modified bisphenol F based epoxy resins, isocyanate modified bisphenol AF based epoxy resin, phenol novolac-modified epoxy resin and o-cresol novolac-modified epoxy resin. In some particulate coating compositions, preferred solid epoxy resins are selected from bisphenol A based epoxy resins, novolac-modified bisphenol A based epoxy resin, isocyanate-modified bisphenol A based epoxy resin and mixtures thereof. In other particulate coating compositions, particularly those with a high Tg, preferred solid epoxy resins are selected from isocyanate-modified epoxy resin, phenol novolac-modified modified epoxy resin, o-cresol novolac-modified epoxy resin and mixtures thereof.

Bisphenol A based epoxy resin, novolac-modified bisphenol A based epoxy resin and mixtures thereof are particularly preferred.

Preferred solid epoxy resins, e.g. bisphenol A based epoxy resins, novolac-modified bisphenol A based epoxy resins and/or isocyanate-modified bisphenol A based epoxy resin, present in the coating compositions of the present invention have an equivalent epoxy weight (EEW) of 250-2000 g/eq, more preferably 300 to 1500 g/eq, still more preferably 350-1200 g/eq, yet more preferably 360-1000 g/eq and especially preferably 500 to 1000 g/eq.

The particulate coating composition of the present invention may comprise one or more solid epoxy resins. In some preferred particulate coating compositions of the present invention, only one type of solid epoxy resin is present and in particular a bisphenol A based epoxy resin or a novolac-modified bisphenol A based epoxy resin. Other preferred coating compositions of the present invention comprise a mixture of two or more, e.g. 2, types of solid epoxy resin. Mixtures of bisphenol A based epoxy resin and novolac-modified bisphenol A based epoxy resin are particularly preferred. When a mixture of bisphenol A based epoxy resin and novolac modified bisphenol A based epoxy resin is used, the weight ratio of bisphenol A based epoxy resin to novolac-modified bisphenol A based epoxy resin is preferably 10:1 to 1:10, more preferably 5:1 to 1:5 and still more preferably 2:1 to 1:2, e.g. about 1:1.

The total amount of solid epoxy resin present in the particulate coating composition of the present invention is preferably 20-90 wt%, more preferably 40-80 wt% and still more preferably 55-75 wt%, based on the total weight of the particulate coating composition.

The particulate coating composition of the present invention preferably does not comprise a liquid epoxy resin. The total amount of liquid epoxy resin present in the particulate coating composition of the present invention is preferably 0-10 wt%, more preferably 0-7.5 wt% and still more preferably 0-5 wt%, based on the total weight of the particulate coating composition. Still more preferably the total amount of liquid epoxy resin present in the particulate coating composition of the present invention is 0 wt%.

The total amount of epoxy resin (i.e. liquid and solid) present in the particulate coating composition of the present invention is preferably 20-90 wt%, more preferably 40-80 wt% and still more preferably 55-75 wt%, based on the total weight of the particulate coating composition.

### Curing Agent

The particulate coating composition of the present invention also comprises a curing agent. The curing agent reacts with the epoxy resin during curing to form a coating, e.g. a film coating. The curing agent therefore facilitates the provision of a coating composition with an acceptable cure time.

Conventional curing agents may be used in the particulate coating composition of the present invention. Representative examples of classes of suitable curing agents that may be used include phenolic curing agents, aromatic amines, carboxylic acids and carboxylic acid functional resins, guanidines such as dicyandiamide, imidazoles and imidazole (epoxy) adducts, anhydrides, polyamides, dihydrazides and mixtures thereof.

Examples of phenolic curing agents that may be present in the particulate coating composition of the present invention include hydroxy-functionalised bisphenol F, hydroxy-functionalised novolac-modified bisphenol F, hydroxy-functionalised bisphenol AF, hydroxy-functionalised novolac-modified bisphenol AF, hydroxy-functionalised bisphenol A, hydroxy-functionalised novolac-modified bisphenol A, hydroxy-functionalised phenol and hydroxy-functionalised cresol. Preferred phenolic curing agents include hydroxy-functionalised bisphenol A, hydroxy-functionalised novolac-modified bisphenol A, hydroxy-functionalised phenol and hydroxy-functionalised cresol. A particularly preferred curing agent is hydroxy-functionalised bisphenol A. Preferably this is the reaction product of liquid bisphenol A epoxy resin and an excess of bisphenol A.

Examples of guanidine curing agents that may be present in the particulate coating composition of the present invention include biguanide curing agents (e.g. 1-(o-tolyl)biguanide and 2,6-xylylbiguanide) and dicyandiamide.

Examples of imidazoles that may be present in the particulate coating composition of the invention include imidazole, 2-methylimidazole, 2-phenylimidazole, and imidazole (epoxy) adducts.

Examples of anhydrides that may be present in the particulate coating composition of the invention include hexahydrophthalic acid anhydride and benzophenonetetracarboxylic dianhydride.

Examples of dihydrazides that may be present in the particulate coating composition of the invention include sebacic acid dihydrazide

Preferably, however, the curing agent present in the particulate coating composition of the invention is selected from phenolic curing agents and guanidines. Still more preferably the curing agent present in the particulate coating composition is a guanidine, more preferably dicyandiamide or 1-(o-tolyl)biguanide, and in particular dicyandiamide. More preferably the curing agent present in the particulate coating composition of the present invention consists of dicyandiamide. Dicyandiamide is particularly preferred as it yields coatings having a relatively high Tg and thus a higher maximum operating temperature. Curing agents, including dicyandiamide, are available commercially from a range of suppliers.

It will be appreciated that the curing agent and the epoxy resin need to react in order to cure the coating. Accordingly, it is preferred if these components are mixed in such a ratio that reactive groups, e.g. epoxy groups in the epoxy resin and e.g. amino hydrogen or hydroxyl groups, within the curing agent if it is guanidine or phenolic respectively, are within ±20-120% of stoichiometric ratio and more preferably within ±75-105% of stoichiometric ratio.

The skilled man will be aware that some of the additives discussed below may contain epoxy, amino hydrogen and/or hydroxyl groups. When calculating the ratio of epoxy resin to curing agent, account should be taken of the contribution made by any reactive groups in the standard additives used in the powder coating. It will be appreciated therefore that this calculation is based, for example, on the total number of epoxy groups and amino hydrogen or hydroxyl groups present. If compounds contain multiple reactive groups that must be considered in these calculations that will nevertheless be routine for the skilled chemist.

The total amount of epoxy binder system, wherein said system comprises the one or more epoxy resin(s) and the one or more curing agent(s), is preferably 20.5 to 95 wt%, more preferably 30 to 90 wt% and still more preferably 50 to 85 wt%, based on the total weight of the particulate coating composition.

The particulate coating composition of the present invention preferably further comprises a curing accelerator. The curing accelerator speeds up the rate of the curing reaction to form a coating, e.g. a film coating. Conventional curing accelerators may be used. For example, the curing accelerator may be selected from imidazoles, anhydrides, polyamides, aliphatic amines, epoxy resin-amine adducts, and tertiary amines. Imidazoles, e.g. 2-methylimidazole, are preferred curing accelerators.

The total amount of curing accelerator present in the particulate coating composition of the present invention is preferably 0-1.5 wt%, more preferably 0.1-1.5 wt% and still more preferably 0.1-1 wt%, based on the total weight of the particulate coating composition.

### Metal flakes

The particulate coating composition of the present invention comprises metal flakes. The purpose of the metal flakes is, in combination with the organosilane adhesion promoter, to improve the hot water resistance and cathodic disbondment resistance of coatings comprising the composition. This makes coatings comprising the particulate coating composition of the invention suitable for coating oil, gas and water pipelines, including those exposed to hot climates during storage or use.

The metal flakes are selected from zinc flakes, aluminium flakes, stainless steel flakes, magnesium flakes or mixtures thereof. More preferably the metal flakes are selected from zinc flakes, aluminium flakes, stainless steel flakes or mixtures thereof. Still more preferably the metal flakes are zinc flakes. A representative example of zinc flakes that is suitable for use in the particulate coating composition of the present invention is STANDART^{®} zinc flake AT from Eckart.

The physical form of the metal component of the particulate coating composition of the invention is important. Metal particles exist in three forms: powder, dust and flake. In the particulate coating compositions of the present invention, metal flakes are present. Metal flakes are lamellar or plate-like in structure. Metal flakes are typically produced from metal dust by ball milling in a non-reactive fluid such as a hydrocarbon. The milling results in each dust particle being flattened into flake form.

Metal flakes differ from metal powders and metal dusts in their aspect ratio and their density. Preferred metal flakes have an aspect ratio (that is the ratio of diameter to thickness) of 5:1 to 40:1, more preferably 15:1 to 25:1 and still more preferably about 20:1.

Preferably the metal flakes are substantially planar. Preferred metal flakes have a thickness of 0.5 to 2 microns and more preferably about 1 micron.

Preferred metal flakes have a particle size D50 of 1 to 100 microns, preferably 6 to 50 microns and still more preferably 10 to 25 microns as measured by a Coulter Particle Size Analyzer. Preferred metal flakes have a particle size D90 of 20 to 120 microns, preferably 30 to 100 microns and still more preferably 25 to 60 microns as measured by a Coulter Particle Size Analyzer. Preferred metal flakes have a particle size D10 of 0.5 to 20 microns, preferably 1.0 to 15 microns and still more preferably 1.5 to 9.5 microns as measured by a Coulter Particle Size Analyzer. The particle sizes of metal flakes referred to herein are the size of the flakes when they are added to the composition and prior to any extrusion process.

Preferred metal flakes, e.g. zinc flakes, have a bulk density below 2, more preferably 0.5 to 2.5 and more preferably 0.7 to 1.5 g/cm³.

Preferably the compositions of the present invention do not comprise metal powder or metal dust. These both differ from metal flakes in that they are substantially spherical in shape.

The amount of metal flakes present in the particulate coating composition of the present invention is preferably 0.5-5 wt%, more preferably 0.8-3 wt% and still more preferably 0.9-2 wt%, based on the total weight of the particulate coating composition.

### Adhesion Promoter

The particulate coating composition of the present invention comprises one or more adhesion promoters. Examples of adhesion promoters include titanates, zincronates, amino alcohols, catechol novolac-type adhesion promoters and organosilanes. Such adhesion promoters are well known in the art.

The particulate coating composition of the invention preferably comprises one or more organosilane adhesion promoter. It has been found that the presence of an organosilane adhesion promoter in combination with metal flakes, e.g. zinc flakes, significantly improves the hot water resistance and cathodic disbondment resistance of coatings made from the composition. The organosilane adhesion promoter has been found to be particularly useful for improving the hot water resistance. This is highly advantageous as this means that the coating does not, for example, loose adhesion, swell or blister during use when in contact with hot fluids, therefore shortening the effective life of the coating.

In preferred powder coating compositions of the invention, the organosilane adhesion promoter is a liquid or a liquid adsorbed on a solid or wax carrier. More preferably the organosilane is a liquid.

In preferred powder coating compositions of the invention, the organosilane is a compound of formula (I):

Y-R(_{4-z})SiX_{z} (I)

wherein z is an integer from 2 to 3;
R is an alkyl chain having 2 to 20 C atoms optionally containing an ether or amino linker;
Y is H or an amino or epoxy functional group bound to the R group; and
X is H, halogen, C₁₋₆ alkyl or C₁₋₆ alkoxy.

In preferred compounds of formula (I) Y is an amino or epoxy functional group bound to the R group and more preferably Y is an epoxy functional group bound to the R group.

In preferred compounds of formula (I) R is unbranched. In preferred compounds of formula (I) R is unsubstituted. In preferred compounds of formula (I) R is an alkyl chain having 2 to 20 C atoms containing an ether or amino linker, and preferably an ether linker.

In preferred compounds of formula (I) R is an alkyl chain having 2 to 8 C atoms. In more preferred compounds of formula (I) R is an alkyl chain having 3, 4, 5 or 6 C atoms, more preferably 3 or 4 C atoms and still more preferably 4 C atoms. In further preferred compounds of formula (I) R is an alkyl chain having 3 or 4 C atoms containing an ether linker. Still more preferably R is -CH₂O(CH₂)₃-

In particularly preferred compounds of formula (I) R is an alkyl chain having 3 or 4 C atoms containing an ether linker and more preferably -CH₂O(CH₂)₃- and Y is an epoxy functional group bound to the R group.

In compounds of formula (I) wherein more than one R group is present, each R may be the same of different, but preferably is the same.

In preferred compounds of formula (I), z is 3. Thus preferably only one R group is present.

In preferred compounds of formula (I) X is a C₁₋₆ alkoxy group and more preferably a C₁₋₄ alkoxy group. Still more preferably X is a C₁, C₂ or C₃ alkoxy group and yet more preferably a C₁ or C₂ alkoxy group. Preferably X is methoxy or ethoxy. Each X may be the same or different, but is preferably the same.

Examples of suitable organosilanes for use in the particulate coating compositions of the present invention are the products manufactured by Evonik and marketed under the brand name of Dynasylan^{®}, the Silquest^{®} silanes manufactured by Momentive, and the GENOSIL^{®} silanes manufactured by Wacker. Specific examples include methacryloxypropyltrimethoxysilane (Dynasylan MEMO, Silquest A-174NT), 3-mercaptopropyltri(m)ethoxysilane (Dynasylan MTMO or 3201; Silquest A-189), 3-glycidoxypropyltrimethoxysilane (Dynasylan GLYMO, Silquest A-187), 3-glycidoxypropyltriethoxysilane (Dynasylan GLYEO, Silquest A-1871), tris(3-trimethoxysilylpropyl) isocyanurate (Silquest Y-11597), gamma-mercaptopropyltrimethoxysilane (Silquest A-189), beta-(3,4-epoxycyclohexyl)ethyltrimethoxysilane (Silquest A-186), gamma-isocyanatopropyltrimethoxysilane (Silquest A-Link 35, Genosil GF40), (methacryloxymethyl)trimethoxysilane (Genosil XL 33), isocyanatomethyl)trimethoxysilane (Genosil XL 43), aminopropyltrimethoxysilane (Dynasylan AMMO; Silquest A-I 110), aminopropyltriethoxysilane (Dynasylan AMEO) or N-(2-aminoethyl)-3-aminopropyltrimethoxysilane (Dynasylan DAMO, Silquest A-I 120) or N-(2-aminoethyl)-3-aminopropyltriethoxysilane, triamino- functional trimethoxysilane (Silquest A-I 130), bis(gamma- trimethoxysilylpropyl)amine (Silquest A-I 170), N-ethyl-gamma- aminoisobytyltrimethoxysilane (Silquest A-Link 15), N-phenyl-gamma- aminopropyltrimethoxysilane (Silquest Y-9669), 4-amino-3,3-dimethylbutyltrimethoxysilane (Silquest Y-11637), (N-cyclohexylaminomethyl)triethoxysilane (Genosil XL 926), (N-phenylaminomethyl)trimethoxysilane (Genosil XL 973), Deolink Epoxy TE and Deolink Amino TE (D.O.G Deutsche Oelfabrik) and mixtures thereof.

The amount of organosilane adhesion promoter present in the particulate coating composition of the present invention is preferably 0.001 to 2 wt%, more preferably 0.1-1 wt% and still more preferably 0.3-0.6 wt%, based on the total weight of the particulate coating composition.

Preferred particulate coating compositions of the present invention comprise:
(i) bisphenol A epoxy resin, preferably 20-90 wt% bisphenol A epoxy resin;
(ii) dicyanamide;
(iii) a curing accelerator, preferably 0.1-1.5 wt% curing accelerator;
(iv) at least one organosilane adhesion promoter of formula (I) as hereinbefore defined, preferably 0.001-2 wt% organosilane adhesion promoter of formula (I) as hereinbefore defined; and
(iv) 0.5-5.0 wt% metal flakes selected from zinc flakes, aluminium flakes, stainless steel flakes, magnesium flakes or mixtures thereof, preferably zinc flakes,
wherein the amount of epoxy binder system comprising bisphenol A epoxy resin and dicyanamide is preferably 20.5 to 95 wt%.

Further preferred particulate coating compositions of the present invention comprise:
(i) bisphenol A epoxy resin;
(ii) Novolac modified bisphenol A epoxy resin;
   wherein the total amount of epoxy resin is preferably 20-90 wt%, based on the total weight of the composition
(iii) dicyanamide;
(iv) a curing accelerator, preferably 0.1-1.5 wt% curing accelerator;
(v) at least one organosilane adhesion promoter of formula (I) as hereinbefore defined, preferably 0.001-2 wt% organosilane adhesion promoter of formula (I) as hereinbefore defined; and
(v) 0.5-5.0 wt% metal flakes selected from zinc flakes, aluminium flakes, stainless steel flakes, magnesium flakes or mixtures thereof, preferably zinc flakes,
wherein the amount of epoxy binder system comprising bisphenol A epoxy resin, novolac modified bisphenol A epoxy resin and dicyanamide is preferably 20.5 to 95 wt%.

Further preferred particulate coating compositions of the present invention comprise:
(i) bisphenol A epoxy resin;
(ii) isocyanate-modified epoxy resin;
   wherein the total amount of epoxy resin is preferably 20-90 wt%, based on the total weight of the composition
(iii) dicyanamide;
(iv) a curing accelerator, preferably 0.1-1.5 wt% curing accelerator;
(v) at least one organosilane adhesion promoter of formula (I) as hereinbefore defined, preferably 0.001-2 wt% organosilane adhesion promoter of formula (I) as hereinbefore defined; and
(v) 0.5-5.0 wt% metal flakes selected from zinc flakes, aluminium flakes, stainless steel flakes, magnesium flakes or mixtures thereof, preferably zinc flakes,
wherein the amount of epoxy binder system comprising bisphenol A epoxy resin, isocyanate-modified epoxy resin and dicyanamide is preferably 20.5 to 95 wt%.

### Fillers

The particulate coating composition of the present invention preferably comprises filler. Conventional fillers may be used.

Preferably the filler does not comprise metal dust or metal powder.

Representative examples of fillers include nepheline syenite, barium sulphate, calcium silicate, magnesium silicate, sodium silicate, feldspar, wollastonite (calcium metasilicate), wollastonite mixed with barium sulfate, mica, mica mixed with barium sulfate, wollastonite mixed with mica, dolomite, calcium phosphate, calcite, magnesium phosphate perlite and other porous fillers having a low coefficient of thermal expansion (CTE), alumina, clays (e.g. layered silicates including phyllosilicates, smectite, hectorite, montmorillonite, and kaolin), sodium metasilicate, magnesium metasilicate, talc, chalk, CaCO₃, sintered glass frit, quartz glass powder, glass rods and glass whiskers having an aspect ratio of from 8:1 to 40:1, glass flakes, chopped glass fibres having an aspect ratio of from 8:1 to 40:1, sodium titanate, silicon carbide, silicon nitride, polytitanocarbosilane, phosphate glass frit having a Tg of from 420 to 450 °C, MgO, and magnesia. Preferred fillers include nepheline syenite, barium sulphate, calcium silicate, magnesium silicate, sodium silicate, feldspar and dolomite. More preferred fillers include nepheline syenite, barium sulphate, calcium silicate, magnesium silicate, sodium silicate and feldspar. Suitable fillers are commercially available.

When present, the amount of filler present in the particulate coating compositions of the present invention is preferably 0-40 wt%, more preferably 10-30 wt%, and still more preferably 15 to 25 wt% based on the total weight of the particulate coating composition.

### Colour pigment

The particulate coating composition of the present invention preferably comprises colour pigments. Conventional colour pigments may be used.

The colour pigments may be inorganic or organic colour pigments. Representative examples of suitable inorganic colour pigments include titanium dioxide, red, black and yellow iron oxides, chrome pigments and carbon black. Representative examples of organic pigments include phthalocyanine, axo, anthraquinone, thioindigo, isodibenzanthrone, triphendioxane, quinacridone pigments, and vat dye pigments.

When present, the amount of colour pigment present in the particulate coating compositions of the present invention is preferably 0-10 wt%, more preferably 0.1-5 wt%, and still more preferably 0.5-4 wt%, based on the total weight of the particulate coating composition.

### Flow Agent

The particulate coating composition of the present invention preferably comprises a flow agent or flow additive. Examples of suitable flow agents include acrylics, silicon containing compounds and fluorine-based polymers. Suitable flow agents are commercially available. The flow agents enhance the compositions melt-flow characteristics and help eliminate surface defects during curing.

When present, the amount of flow agent present in the powder compositions of the present invention is preferably 0-5 wt% and more preferably 0.1-2 wt%, based on the total weight of the particulate coating composition.

### Additives

The particulate coating composition of the invention optionally comprises a wide variety of additives. Examples of additives that are optionally present in the composition of the invention include metal phosphate, metal borate, amino alcohols, degassing additive, moisture scavengers, gloss modifiers, scratch resistors, dyes, drying agents, waxes, antioxidants, optical brighteners and surface modifying agents. Additional additives are preferably present in an amount of 0 to 20 wt%, more preferably 0.1-10 wt%, still more preferably 0.1 to 5 wt% and particularly preferably 0.5 to 5 wt%, based on the total weight of the particulate coating composition.

### Containers and kits

The present invention also relates to a container containing a particulate coating composition as hereinbefore described. Suitable containers include cardboard boxes lined with a plastic bag and plastic bags (so called "big bags").

Alternatively the particulate coating composition of the present invention may be provided in the form of a kit. In a kit the metal flakes are preferably contained separately to the other components of the particulate coating composition. Kits therefore comprise:
(i) a first container containing at least one epoxy resin, at least one curing agent and at least one organosilane adhesion promoter;
(ii) a second container containing 0.5-9.0 wt% of metal flakes selected from zinc flakes, aluminium flakes, stainless steel flakes, magnesium flakes or mixtures thereof, based on the total weight of the contents of the containers of the kit; and
(iii) instructions for mixing the at least one epoxy resin, at least one curing agent, at least one organosilane adhesion promoter and metal flakes.

### Manufacture

The present invention also relates to a process for preparing a particulate coating composition as hereinbefore described comprising:
(i) blending at least one epoxy resin, at least one curing agent, at least one organosilane adhesion promoter and 0.5-9.0 wt% of metal flakes selected from zinc flakes, aluminium flakes, stainless steel flakes, magnesium flakes or mixtures thereof, based on the total weight of the composition, to form a mixture; and
(ii) extruding said mixture to form particles.

The extruded particles may take any form, e.g. spherical particles, chips or flakes.

Preferred processes of the invention further comprise milling the extruded particles to form powder. Milling may be carried out in any conventional mill to a particle size found most suitable for powder application.

Other preferred processes of the invention further comprise sieving the milled particles. Thus a preferred process of the invention comprises:
(i) blending at least one epoxy resin, at least one curing agent, at least one organosilane adhesion promoter and 0.5-9.0 wt% of metal flakes selected from zinc flakes, aluminium flakes, stainless steel flakes, magnesium flakes or mixtures thereof, based on the total weight of the composition, to form a mixture;
(ii) extruding said mixture to form extruded particles;
(iii) milling said extruded particles to form milled particles; and
(iv) sieving said milled particles.

Optionally a fluidizing agent (e.g. fumed aluminium oxide or fumed silica) is added during milling and/or sieving.

Any conventional mixing, extrusion and milling method may be used. The preferred extrusion conditions are conventional and will generally be kept at low temperature, e.g. below 140 °C, to avoid premature curing.

The particle size distribution d50 of the powder coating composition is preferably in the range of 10 to 120 µm, and still more preferably 15 to 100 µm. The preferred particle size d50 is at least 20 or 25 µm, and advantageously does not exceed 80 µm, e.g. 30 to 70 µm. In general, particle sizes can be established using a Malvern particle size analyser. After milling, sieving is preferably carried out to remove coarse particles.

### Application to substrates and Coating

The present invention also relates to a method for coating a substrate with a particulate coating composition as hereinbefore described, comprising:
i) applying the particulate coating composition to said substrate; and
ii) curing said particulate coating composition.

Optionally the substrate is pre-treated, e.g. degreased, desalted, shor or grit blasted, dedusted, prior to application of the particulate coating composition.

In preferred methods of the invention the substrate is pre-heated and the heat in the substrate cures the coating. Preferred methods of the invention therefore comprise:
i) pre-heating a substrate, e.g. to a temperature exceeding the curing temperature of the particulate coating composition;
ii) applying the particulate coating composition to said pre-heated substrate; and
iii) curing said particulate coating composition.

The particulate coating composition of the invention may be applied to a substrate by any conventional powder coating method, e.g. electrostatic spraying or dip coating. A pre-heated substrate may, for example be coated in a spray booth or dipped in a fluidised bed of the powder. Preheating preferably heats the substrate to a temperature above the fusion temperature of the powder and is retained for sufficient time to allow the coating to flow, fuse and cure into a continuous coating. Coating techniques are well known in the art and will be familiar to the skilled man. Electrostatic spraying is preferred.

The present invention also relates to a coating comprising a particulate coating composition as hereinbefore described. Preferably the coating is cured. Alternatively viewed the present invention relates to a coating obtainable by spraying or dipping and curing a particulate coating composition as hereinbefore described.

The particulate coating composition of the present invention may be used to form a single layer coating or a multilayer coating. In the case of a multilayer coating the particulate coating composition of the present invention is preferably used to form a first or base layer on the substrate, e.g. metal pipe.

### Curing

Once a substrate is coated with the particulate coating composition of the invention, the coating is preferably cured. Curing may be carried out by continuous heating, subsequent heating or residual heat in the substrate. Preferably the particulate coating composition of the invention is cured by the heat remaining in a pre-heated substrate. Additionally, or alternatively, the particulate coating composition of the invention may be cured by placing the substrate in a post cure oven. The heating process enables the particles to melt and fuse and then cure.

The particulate coating composition is preferably free flowing during the curing operation. Advantageously this leads to smooth, even finishes. The film thickness of the cured coating is preferably 100 to 700 microns such as 120 to 600 microns especially 150 to 500 microns.

It is a feature of the invention that the particulate coating composition of the invention is water resistant, i.e. does not loose adhesion, swell significantly or blister upon exposure to water, even at high temperatures. Preferably the coating of the present invention swells less than 25 %, as measured by an increase in film thickness, after 28 days at 95 °C.

Preferably the coating of the present invention has a Tg of 95-200 °C, more preferably 100-150 °C and still more preferably 105-115 °C or 120 to 150 °C, e.g. as determined by Differential Scanning Calorimetry (DSC).

Preferably the coating of the present invention has a pigment volume concentration (PVC) of 5-25, more preferably 7-18 and still more preferably 9-13, e.g. as calculated from the theoretical density of the components of the coating and their wt%.

### Substrate and Articles

The present invention also relates to a substrate coated with a particulate coating composition as hereinbefore described or a coating as hereinbefore described. The particulate coating composition of the invention may be applied to any substrate. Representative examples of substrates include metal substrate (steel, galvanized steel, aluminium), glass, ceramic, graphite-filled composites and so on. A preferred substrate is a metal substrate. Examples of metal substrates include line pipes, bends and fittings, valves, pumps, tapping saddles, manifolds, pipe hangers, ladders, mesh, rebar, cable and wire rope, I-beams, column coils, anchor plates and chairs. A particularly preferred substrate is a metal pipe, e.g. metal pipes for oil, gas or water pipelines. It is a feature of the invention that metal substrates coated with the particulate coating composition of the invention does not corrode even when the coating contains holidays.

The substrate may be partially or completely coated with the particulate coating composition or coating of the invention. Preferably, however, all of the substrate is coated with the particulate coating composition or coating of the invention. In the case of a pipe this preferably includes the internal and external walls of the pipeline. Still more preferably the external wall of a pipe is coated with the particulate coating composition of the invention.

The invention will now be described by the following non-limiting examples.

### EXAMPLES

### Materials

The polymers and compounds used in the examples were all available commercially. The polymers and compounds used are summarised in the table below.

| | |
|---|---|
| Bisphenol A epoxy resin (EEW 875-975) | Binder |
| Novolac modified bisphenol A epoxy resin (EEW 750-850) | Binder |
| High temperature bisphenol A epoxy resin epoxy resin (EEW 380-420) | Binder |
| Accelerator | Curing agent |
| Phenolic curing agent | Curing agent |
| Dicyandiamide curing agent | Curing agent |
| 1-(o-Tolyl)biguanide | Curing agent |
| Nepheline syenite | Filler |
| Barium sulphate | Filler |
| Calcium silicate | Filler |
| Silicate | Filler |
| Titanium dioxide | Colour pigment |
| Yellow iron oxide | Colour pigment |
| Black iron oxide | Colour pigment |
| Red iron oxide | Colour pigment |
| Organic green pigment | Colour pigment |
| Acrylic copolymer | Flow agent |
| Calcium oxide | Drying agent |
| STANDART^{®} zinc flake AT from Eckart | Filler |
| Zinc powder | Filler |
| 3-(2,3-epoxypropoxy)propyl)trimethoxysilane | Adhesion promoter |
| 3-(2,3-epoxypropoxy)propyl)triethoxysilane | Adhesion promoter |
| Aluminium oxide | Fluidising agent |

### Preparation of Powdered Epoxy Coating Samples

Example formulations were prepared using a mixing and extrusion process. A sample of the coating was prepared by dry blending the binders, curing agents, fillers, pigments, adhesion promoter, and additives to the correct relative amounts in a high shear mixer (Thermo Scientific Prism 5) at about 500 revolutions per minute (rpm) for a total time of about 90 seconds. After premixing, the samples were melt-mixed using a twin screw extruder (Theyson). The extruded material was then ground and a fluidizing agent, aluminium oxide, was added to the desired wt %. After milling, the material was screened using a sieve with a 250 µm screen.

The formulations are summarised in Tables 1, 3, 5, 7 and 9 below, wherein the amounts of the ingredients are specified in wt% unless otherwise specified.

### Preparation of samples for testing

Steel panel specimens for Cathodic Disbondment Testing (CDT) and Hot Water Adhesion Testing (HWT) of laboratory applied coatings were hot rolled steel with dimensions of 100 mm×110 mmx6 mm. Laboratory-coated test specimens were prepared as follows:
1. The steel specimens were soaked and wiped with methylethylketone followed by a hot tap water rinse.
2. The dry steel surface was grit-blasted to a near-white finish.
3. The steel specimens were pre-heated in an oven for approximately 40 minutes at 230 °C.
4. An electrostatic spray gun was used to coat the steel specimens to give a coating thickness of 300 to 450 µm.
5. The coated specimens were placed in a post-cure oven at 230 °C for 6 minutes.
6. The coated specimens were then quenched in cold water bath.

### Test Methods

Cathodic Disbondment Test: Canadian Standards Association (CSA) Z245.20-14 clause 12.8

This test is a measure of the ability to resist cathodic disbondment. The laboratory-coated panel specimens were tested as follows:
1. A 3 mm diameter holiday was drilled into the centre of the panel.
2. The test cell, constructed using a clear glass tube with an OD of 80 mm, wall thickness of 3.5 mm and 110 mm long, was attached to the fusion bond epoxy surface using a silicone sealant.
3. 3% sodium chloride in deionized water was used as the electrolyte in each cell.
4. The platinum wire used as the anode was inserted through a hole in the top of the cell and a potential difference of -1.5 VDC between the steel substrate and a Radiometer Analytical REF201 reference electrode, was applied.
5. The samples were placed in an air circulating oven at 65° C or in a sand bath where the temperature was adjusted so that the temperature measured in the holiday was 65 °C.
6. The actual potential difference and the level of the electrolyte were checked periodically and adjusted as necessary. The electrolyte was replaced every 7 days.
7. At the end of the test period, typically after 28 days, the test cell was dismantled, the electrolyte and glass tube were removed, and adhesion near the holiday was evaluated thereafter within one hour by making eight radial cuts and using a utility knife with leveraging action to chip off the coating. The disbondment was measured from the edge of the holiday to the edge of the remaining coating along the radial cuts and the results were averaged.
8. All values reported are the average of the results in millimetres obtained on 2 test panels unless otherwise noted.

### Hot Water Adhesion Test: Canadian Standards Association (CSA) Z245.20-14 clause 12.14

This test is a measure of the ability of a coating to maintain adhesion when exposed to hot water.
1. Fresh tap water was preheated to the temperature specified prior to immersion of the test specimens.
2. The test specimens were placed in the preheated water and submerged fully.
3. The test specimens were kept submerged for the length of time specified (typically 28 days).
4. Upon removal of the specimen and while the test specimen was still warm, a utility knife was used to scribe an approximately 30×15 mm rectangle through the coating to the substrate.
5. The test specimen was air-cooled to 20±3°C.
6. Within 1 hour after removal from heat, the tip of the utility knife was inserted under the coating at a corner of the scribed rectangle.
7. A levering action was used to remove the coating. This process was continued until either all of the coating in the rectangle was removed or the coating demonstrated a definite resistance to the levering action.
8. The adhesion of the coating within the rectangle was assigned a rating as follows:
   Rating 1-coating cannot be removed cleanly.
   Rating 2-less than 50% of the coating can be removed.
   Rating 3-more than 50% of the coating can be removed, but the coating demonstrates a definite resistance to the levering action.
   Rating 4-the coating can be easily removed in strips or large chips.
   Rating 5-the coating can be completely removed as a single piece.
9. All values reported are the average of the results obtained on 2 test panels unless otherwise noted.

The results are set out in Tables 2, 4, 6, 8 and 10 below.

### Example 1

**Table 1**

| **Generic name** | **Description** | CE1 | CE2 | CE3 | 1 |
|---|---|---|---|---|---|
| Bisphenol A epoxy resin | Binder | 26.8 | 26.1 | 26.0 | 26.0 |
| Novolac-modified epoxy resin | Binder | 26.8 | 26.1 | 26.0 | 26.0 |
| Phenolic curing agent | Curing agent | 14.9 | 14.5 | 14.4 | 14.4 |
| Accelerator | Curing agent | 0.2 | 0.2 | 0.2 | 0.2 |
| Nepheline syenite | Filler | 13.4 | 11.9 | 11.8 | 11.8 |
| Barium sulphate | Filler | 13.4 | 11.9 | 11.8 | 11.8 |
| Titanium dioxide | Colour pigment | 2.0 | 2.0 | 2.0 | 2.0 |
| Inorganic colour pigments | Colour pigment | 0.06 | 0.06 | 0.06 | 0.06 |
| Acrylic copolymer | Flow agent | 0.5 | 0.5 | 0.5 | 0.5 |
| Calcium oxide | Drying agent | 2.0 | 2.0 | 2.0 | 2.0 |
| Zinc flake | Filler | - | - | - | 5.0 |
| Zinc powder | Filler | - | 5.0 | 5.0 | - |
| 3-(2,3-epoxypropoxy)propyl)trimethoxysilane | Adhesion promote r | - | - | 0.3 | 0.3 |

**Table 2**

| | HWT at 75 °C/28 days | HWT at 95 °C/28 days | CD at 65 °C/28 days Hotplate | CD at 65 °C/28 days Oven |
|---|---|---|---|---|
| CE1 (no Zn flakes or silane) | 3 | 5 | 5.6 | 16.3 |
| CE2 (Zn powder, no silane) | 1 | 3 | 3.1 | 12.3 |
| CE3 (Zn powder + silane) | 1 | 1 | 6.4 | 13.5 |
| 1 (Zn flakes and silane) | 1 | 1 | 2.7 | 2.1 |

The formulations comprising zinc flakes show a significant improvement compared to the formulation without zinc flakes and with the formulation comprising zinc powder. The presence of zinc powder gives some improvement, but not to the same level as flakes. Additionally it was observed that the tendency of a coating to blister during the hot water test was also reduced when zinc flakes and/or silane is present in the coating.

### Example 2

**Table 3**

| **Generic name** | **Description** | CE4 | CE5 | 2 | 3 |
|---|---|---|---|---|---|
| Bisphenol A epoxy resin | Binder | 30.4 | 29.0 | 29.1 | 29.0 |
| Novolac-modified epoxy resin | Binder | 30.4 | 29.0 | 29.1 | 29.0 |
| Phenolic curing agent | Curing agent | 14.5 | 13.9 | 13.9 | 13.9 |
| Accelerator | Curing agent | 0.3 | 0.3 | 0.3 | 0.3 |
| Nepheline syenite | Filler | 9.1 | 8.7 | 8.7 | 8.7 |
| Barium sulphate | Filler | 8.4 | 8.0 | 9.6 | 8.0 |
| Titanium dioxide | Colour pigment | 1.1 | 1.0 | 1.0 | 1.0 |
| Organic green pigment | Colour pigment | 0.1 | 0.1 | 0.1 | 0.1 |
| Yellow iron oxide | Colour pigment | 2.8 | 2.7 | 2.7 | 2.7 |
| Acrylic copolymer | Flow agent | 0.5 | 0.5 | 0.5 | 0.5 |
| Calcium oxide | Drying agent | 2.3 | 2.2 | 2.2 | 2.2 |
| 3-(2,3-epoxypropoxy)propyl)trimethoxysilane | Adhesion promote r | 0.2 | 0.2 | 0.2 | 0.2 |
| Zinc powder | Filler | - | 4.7 | - | - |
| Zinc flakes | Filler | - | - | 2.9 | 4.8 |

**Table 4**

| | HWT at 75 °C/28 days | CD at 65 °C/28 days Oven |
|---|---|---|
| CE4 (no Zn) | 2 | 26.0 |
| CE5 (Zn powder) | 3 | 12.6 |
| 2 (Zn flakes | 2 | 5.3 |
| 3 (Zn flakes) | 1-2 | 5.9 |

The results show that zinc flakes, even when used in lower amounts than zinc powder, improve CDT and HWT performance to a higher level.

### Example 3

**Table 5**

| **Generic name** | **Description** | CE6 | 4 | 5 | 6 | 7 | 8 |
|---|---|---|---|---|---|---|---|
| Bisphenol A epoxy resin | Binder | 34.3 | 34.1 | 34.0 | 33.8 | 70.7 | 69.4 |
| Novolac-modified epoxy resin | Binder | 34.3 | 34.1 | 34.0 | 33.8 | - | - |
| Accelerator | Curing agent | 0.1 | 0.1 | 0.1 | 0.1 | 0.2 | 0.2 |
| Dicyandiamide curing agent | Curing agent | 1.5 | 1.5 | 1.5 | 1.5 | 1.4 | - |
| 1-(o-Tolyl)biguanide | Curing agent | - | - | - | - | - | 2.6 |
| Acrylic copolymer | Flow agent | 0.5 | 0.5 | 0.5 | 0.5 | 0.6 | 0.6 |
| Calcium oxide | Drying agent | 1.0 | 1.0 | 1.0 | 1.0 | 1.0 | 1.0 |
| 3-(2,3-epoxypropoxy) propyltriethoxysilane | Adhesion promoter | 0.5 | 0.5 | 0.5 | 0.5 | 0.5 | 0.5 |
| Titanium dioxide | Colour pigment | 2.0 | 2.0 | 2.0 | 2.0 | 1.9 | 1.9 |
| Yellow iron oxide | Colour pigment | 2.6 | 2.6 | 2.6 | 2.5 | 2.5 | 2.4 |
| Organic green pigment | Colour pigment | 0.2 | 0.2 | 0.2 | 0.2 | 0.2 | 0.2 |
| Barium sulphate | Filler | 11.5 | 11.2 | 10.9 | 10.5 | 14.3 | 14.6 |
| Calcium silicate | Filler | 11.5 | 11.2 | 10.9 | 10.5 | 4.8 | 4.9 |
| Zinc flakes | Filler | - | 1.0 | 2.0 | 3.1 | 1.9 | 1.9 |

**Table 6**

| | HWT at 75 °C/28 days | HWT at 95 °C/28 days | CD at 65 °C/28 days Hotplate | CD at 65 °C/28 days Oven |
|---|---|---|---|---|
| CE6 (no Zn flakes) | 1 | 2 | 6.7 | 14.7 |
| 4 (1 wt% Zn flakes) | 1 | 1 | 2.9 | 3.8 |
| 5 (2 wt% Zn flakes) | 1 | 1 | 2.9 | 2.9 |
| 6 (3 wt% Zn flakes) | 1 | 1 | 3.0 | 3.6 |
| 7 (2 wt% Zn flakes) | 1 | 1 | 2.9 | 4.2 |
| 8 (2 wt% Zn flakes) | 1 | 1 | 2.3 | 3.3 |

The results show that a formulation comprising as little as 1 wt% zinc flakes significantly improves its performance compared to a formulation lacking zinc flakes. The results show that the improvent in performance is achieved with formulations comprising different curing agents.

### Example 4

**Table 7**

| **Generic name** | **Description** | CE7 | CE8 | CE9 | 9 |
|---|---|---|---|---|---|
| Bisphenol A epoxy resin | Binder | 34.8 | 34.7 | 34.5 | 34.3 |
| Novolac-modified epoxy resin | Binder | 34.8 | 34.7 | 34.5 | 34.3 |
| Accelerator | Curing agent | 0.1 | 0.1 | 0.1 | 0.1 |
| Dicyandiamide curing agent | Curing agent | 1.5 | 1.5 | 1.5 | 1.5 |
| Silicate | Filler | 8.4 | 8.3 | 8.3 | 8.2 |
| Barium sulphate | Filler | 15.5 | 15.4 | 15.3 | 15.3 |
| Titanium dioxide | Colour pigment | 2.3 | 2.3 | 2.3 | 2.3 |
| Organic green pigment | Colour pigment | 0.1 | 0.1 | 0.1 | 0.1 |
| Acrylic copolymer | Flow agent | 0.4 | 0.4 | 0.4 | 0.4 |
| Calcium oxide | Drying agent | 2.2 | 2.2 | 2.1 | 2.1 |
| 3-(2,3-epoxypropoxy)propyltriethoxysilane | Adhesion promoter | - | 0.3 | - | 0.3 |
| Zinc flakes | Filler | - | - | 1.0 | 1.0 |

**Table 8**

| | HWT at 75 °C/28 days | HWT at 95 °C/28 days | CD at 65 °C/28 days Hotplate | CD at 65 °C/28 days Oven |
|---|---|---|---|---|
| CE7 | 5 | 3 | 5.4 | 12.7 |
| CE8 | 1 | 1 | 4.3 | 10.0 |
| CE9 | 3 | 3 | 3.6 | 3.4 |
| 9 | 1 | 1 | 2.7 | 2.8 |

The results show that the combination of zinc flakes and organosilane significantly improve the performance of the coating compared to the presence of either zinc flakes or organosilane alone.

### Example 5

**Table 9**

| **Generic name** | **Description** | CE10 | 10 | 11 |
|---|---|---|---|---|
| High temperature epoxy resin | Binder | 61.4 | 58.2 | 30.3 |
| Bisphenol A epoxy resin | Binder | - | - | 43.6 |
| Dicyandiamide curing agent | Curing agent | 1.7 | 1.7 | 2.4 |
| Phenolic curing agent | Curing agent | 13.4 | 10.7 | - |
| Accelerator | Binder | 0.17 | 0.20 | 0.27 |
| Silicate | Filler | 10.4 | 10.9 | 10.3 |
| Barium sulphate | Filler | 8.2 | 7.5 | 0.9 |
| Titanium dioxide | Colour pigment | 2.0 | 2.8 | 3.0 |
| Organic blue pigment | Colour pigment | 0.10 | 0.14 | - |
| Yellow iron oxide | Colour pigment | - | - | 0.50 |
| Acrylic copolymer | Flow agent | 0.58 | 0.54 | 0.58 |
| Calcium oxide | Drying agent | 2.0 | 1.9 | 2.9 |
| 3-(2,3-epoxypropoxy)propyltrimethoxysilane | Adhesion promoter | - | 0.50 | 0.38 |
| Zinc flakes | Filler | - | 5.0 | 4.8 |

**Table 10**

| | HWT at 75 °C/28 days | HWT at 95 °C/28 days | CD at 65 °C/28 days Hotplate | CD at 65 °C/28 days Oven |
|---|---|---|---|---|
| CE10 | 2 | 5 | 10.9 | - |
| 10 | 1 | 1 | 2.6 | 2.1 |
| 11 | 2 | 1 | 4.6 | - |

The results show that the combination of zinc flakes and organosilane significantly improve the performance of the higher glass transition temperature coatings compared to the coating without zinc flakes and organosilane.

## Claims

1. A particulate coating composition, and preferably a powder coating composition, comprising:
(i) at least one epoxy resin, preferably 20-90 wt% epoxy resin;
(ii) at least one curing agent;
(iii) at least one organosilane adhesion promoter, preferably 0.001-2 wt% organosilane adhesion promoter; and
(iv) 0.5-9.0 wt% metal flakes, wherein said metal flakes are selected from zinc flakes, aluminium flakes, stainless steel flakes, magnesium flakes or mixtures thereof.

2. A composition as claimed in claim 1, wherein said epoxy resin has an equivalent epoxy weight of 300-2000 g/equivalent.

3. A composition as claimed in claim 1 or 2, wherein said epoxy resin comprises a bisphenol A epoxy resin.

4. A composition as claimed in any one of claims 1 to 3, wherein said epoxy resin comprises a novolac-modified epoxy resin.

5. A composition as claimed in any one of claims 1 to 3, wherein said epoxy resin comprises isocyanate-modified resin, phenol novolac-modified modified epoxy resin or o-cresol novolac-modified epoxy resin.

6. A composition as claimed in any one of claims 1 to 5, wherein said curing agent is selected from phenolic curing agents and guanidines, and preferably dicyanamide.

7. A composition as claimed in any one of claims 1 to 6, wherein said metal flakes are zinc flakes.

8. A composition as claimed in any one of claims 1 to 7, comprising 1 to 5 wt% metal flakes, e.g. zinc flakes, based on the total weight of the composition.

9. A composition as claimed in any one of claims 1 to 8, wherein said organosilane adhesion promoter is a compound of formula (I):
Y-R_{(4-z)}SiX_{z}
wherein z is an integer from 2 to 3;
R is an alkyl chain having 2 to 20 C atoms preferably containing an ether or amino linker;
Y is H, an amino or epoxy functional group bound to the R group and preferably Y is an epoxy functional group bound to the R group; and
X is H, halogen, C₁₋₆ alkyl or C₁₋₆ alkoxy and preferably X is C₁₋₆ alkoxy.

10. A process for preparing a particulate coating composition as claimed in any one of claims 1 to 9 comprising:
(i) blending at least one epoxy resin, at least one curing agent, at least one organosilane adhesion promoter and 0.5-9.0 wt% of metal flakes selected from zinc flakes, aluminium flakes, stainless steel flakes, magnesium flakes or mixtures thereof, based on the total weight of the composition, to form a mixture; and
(ii) extruding said mixture to form particles.

11. A coating, preferably a cured coating, comprising a particulate coating composition as claimed in any one of claims 1 to 9.

12. A substrate, preferably a metal substrate, e.g. a metal pipe, coated with a particulate coating composition as claimed in any one of claims 1 to 9 or a coating as claimed in claim 11.

13. A method for coating a substrate, preferably a metal substrate, e.g. a metal pipe, with a particulate coating composition as claimed in any one of claims 1 to 9, comprising:
i) applying said particulate coating composition to said substrate; and
ii) curing said particulate coating composition.

14. Use of a particulate coating composition as claimed in any one of claims 1 to 9 to coat a substrate, preferably a metal substrate, e.g. a metal pipe.

15. A kit comprising:
(i) a first container containing at least one epoxy resin, at least one curing agent and at least one organosilane adhesion promoter;
(ii) a second container containing 0.5-9.0 wt% of metal flakes selected from zinc flakes, aluminium flakes, stainless steel flakes, magnesium flakes or mixtures thereof, based on the total weight of the contents of the containers of the kit; and
(iii) instructions for mixing at least one epoxy resin, at least one curing agent, at least one organosilane adhesion promoter and metal flakes.

## Patentansprüche

1. Partikelbeschichtungszusammensetzung, und vorzugsweise Pulverbeschichtungszusammensetzung, umfassend:
(i) mindestens ein Epoxidharz, vorzugsweise 20-90 Gew.-% Epoxidharz;
(ii) mindestens ein Härtungsmittel;
(iii) mindestens einen Organosilan-Haftvermittler, vorzugsweise 0,001-2 Gew.-% Organosilan-Haftvermittler; und
(iv) 0,5-9,0 Gew.-% Metallplättchen, wobei die Metallplättchen aus Zinkplättchen, Aluminiumplättchen, Edelstahlplättchen, Magnesiumplättchen oder Gemischen davon ausgewählt sind.

2. Zusammensetzung nach Anspruch 1, wobei das Epoxidharz ein Epoxidäquivalentgewicht von 300-2000 g/Äquivalent aufweist.

3. Zusammensetzung nach Anspruch 1 oder 2, wobei das Epoxidharz ein Bisphenol-A-Epoxidharz umfasst.

4. Zusammensetzung nach einem der Ansprüche 1 bis 3, wobei das Epoxidharz ein Novolak-modifiziertes Epoxidharz umfasst.

5. Zusammensetzung nach einem der Ansprüche 1 bis 3, wobei das Epoxidharz ein Isocyanat-modifiziertes Harz, ein Phenol-Novolak-modifiziertes modifiziertes Epoxidharz oder ein o-Kresol-Novolak-modifiziertes Epoxidharz umfasst.

6. Zusammensetzung nach einem der Ansprüche 1 bis 5, wobei das Härtungsmittel aus phenolischen Härtungsmitteln und Guanidinen und vorzugsweise Dicyanamid ausgewählt ist.

7. Zusammensetzung nach einem der Ansprüche 1 bis 6, wobei die Metallplättchen Zinkplättchen sind.

8. Zusammensetzung nach einem der Ansprüche 1 bis 7, umfassend 1 bis 5 Gew.-% Metallplättchen, z.B. Zinkplättchen, bezogen auf das Gesamtgewicht der Zusammensetzung.

9. Zusammensetzung nach einem der Ansprüche 1 bis 8, wobei der Organosilan-Haftvermittler eine Verbindung der Formel (I) ist:
Y-R_{(4-z)}SiX_{z}
wobei z eine ganze Zahl von 2 bis 3 ist;
R eine Alkylkette mit 2 bis 20 C-Atomen ist, die vorzugsweise einen Ether- oder Amino-Linker enthält;
Y H, eine an die R-Gruppe gebundene funktionelle Amino- oder Epoxygruppe ist und Y vorzugsweise eine an die R-Gruppe gebundene funktionelle Epoxygruppe ist; und
X H, Halogen, C₁₋₆-Alkyl oder C₁₋₆-Alkoxy ist und X vorzugsweise C₁₋₆-Alkoxy ist.

10. Verfahren zur Herstellung einer Partikelbeschichtungszusammensetzung nach einem der Ansprüche 1 bis 9, umfassend:
(i) Vermischen von mindestens einem Epoxidharz, mindestens einem Härtungsmittel, mindestens einem Organosilan-Haftvermittler und 0,5-9,0 Gew.-% Metallplättchen, ausgewählt aus Zinkplättchen, Aluminiumplättchen, Edelstahlplättchen, Magnesiumplättchen oder Gemischen davon, bezogen auf das Gesamtgewicht der Zusammensetzung, zur Bildung eines Gemisches; und
(ii) Extrudieren des Gemisches zur Bildung von Partikeln.

11. Beschichtung, vorzugsweise eine gehärtete Beschichtung, umfassend eine Partikelbeschichtungszusammensetzung nach einem der Ansprüche 1 bis 9.

12. Substrat, vorzugsweise ein Metallsubstrat, z.B. ein Metallrohr, beschichtet mit einer Partikelbeschichtungszusammensetzung nach einem der Ansprüche 1 bis 9 oder einer Beschichtung nach Anspruch 11.

13. Verfahren zum Beschichten eines Substrats, vorzugsweise eines Metallsubstrats, z.B. eines Metallrohrs, mit einer Partikelbeschichtungszusammensetzung nach einem der Ansprüche 1 bis 9, umfassend:
i) Aufbringen der Partikelbeschichtungszusammensetzung auf das Substrat; und
ii) Aushärten der Partikelbeschichtungszusammensetzung.

14. Verwendung einer Partikelbeschichtungszusammensetzung nach einem der Ansprüche 1 bis 9 zum Beschichten eines Substrats, vorzugsweise eines Metallsubstrats, z.B. eines Metallrohrs.

15. Kit, umfassend:
(i) einen ersten Behälter, der mindestens ein Epoxidharz, mindestens ein Härtungsmittel und mindestens einen Organosilan-Haftvermittler enthält;
(ii) einen zweiten Behälter, der 0,5-9,0 Gew.-% Metallplättchen, ausgewählt aus Zinkplättchen, Aluminiumplättchen, Edelstahlplättchen, Magnesiumplättchen oder Gemischen davon, bezogen auf das Gesamtgewicht des Inhalts der Behälter des Kits, enthält; und
(iii) Anweisungen zum Mischen von mindestens einem Epoxidharz, mindestens einem Härtungsmittel, mindestens einem Organosilan-Haftvermittler und Metallplättchen.

## Revendications

1. Composition de revêtement particulaire, et de préférence composition de revêtement en poudre, comprenant :
(i) au moins une résine époxy, de préférence 20 à 90 % en poids de résine époxy,
(ii) au moins un agent de durcissement,
(iii) au moins un promoteur d'adhérence organosilane, de préférence 0,001 à 2 % en poids de promoteur d'adhérence organosilane, et
(iv) 0,5 à 9,0 % en poids de paillettes de métal, dans laquelle lesdites paillettes de métal sont sélectionnées parmi des paillettes de zinc, des paillettes d'aluminium, des paillettes d'acier inoxydable, des paillettes de magnésium ou des mélanges d'entre elles.

2. Composition selon la revendication 1, dans laquelle ladite résine époxy a un poids équivalent d'époxy de 300 à 2000 g/équivalent.

3. Composition selon la revendication 1 ou 2, dans laquelle ladite résine époxy comprend une résine époxy de bisphénol A.

4. Composition selon l'une quelconque des revendications 1 à 3, dans laquelle ladite résine époxy comprend une résine époxy modifiée par une novolaque.

5. Composition selon l'une quelconque des revendications 1 à 3, dans laquelle ladite résine époxy comprend une résine modifiée par un isocyanate, une résine époxy modifiée par une novolaque phénolique ou une résine époxy modifiée par une novolaque o-crésolique.

6. Composition selon l'une quelconque des revendications 1 à 5, dans laquelle ledit agent de durcissement est sélectionné parmi des agents de durcissement phénoliques et des guanidines, et de préférence du dicyanamide.

7. Composition selon l'une quelconque des revendications 1 à 6, dans laquelle lesdites paillettes de métal sont des paillettes de zinc.

8. Composition selon l'une quelconque des revendications 1 à 7, comprenant 1 à 5 % en poids de paillettes de métal, par ex. des paillettes de zinc, rapporté au poids total de la composition.

9. Composition selon l'une quelconque des revendications 1 à 8, dans laquelle ledit promoteur d'adhérence organosilane est un composé de formule (I) :
Y-R_{(4-z)}SiX_{z}
dans laquelle z est un entier de 2 à 3,
R est une chaîne alkyle comportant 2 à 20 atomes de C contenant de préférence un segment de liaison éther ou amino,
Y est H, un groupe fonctionnel amino ou époxy lié au groupe R, et de préférence Y est un groupe fonctionnel époxy lié au groupe R, et
X est H, un halogène, un alkyle en C₁₋₆ ou un alcoxy en C₁₋₆, et de préférence X est un alcoxy en C₁₋₆.

10. Procédé de préparation d'une composition de revêtement particulaire selon l'une quelconque des revendications 1 à 9, comprenant :
(i) le mélange d'au moins une résine époxy, d'au moins un agent de durcissement, d'au moins un promoteur d'adhérence organosilane et de 0,5 à 9,0 % en poids de paillettes de métal sélectionnées parmi des paillettes de zinc, des paillettes d'aluminium, des paillettes d'acier inoxydable, des paillettes de magnésium ou des mélanges d'entre elles, rapporté au poids total de la composition, pour former un mélange, et
(ii) l'extrusion du dit mélange pour former des particules.

11. Revêtement, de préférence revêtement durci, comprenant une composition de revêtement particulaire selon l'une quelconque des revendications 1 à 9.

12. Substrat, de préférence un substrat métallique, par ex. un tuyau métallique, revêtu avec une composition de revêtement particulaire selon l'une quelconque des revendications 1 à 9 ou un revêtement selon la revendication 11.

13. Procédé de revêtement d'un substrat, de préférence d'un substrat métallique, par ex. un tuyau métallique, avec une composition de revêtement particulaire selon l'une quelconque des revendications 1 à 9, comprenant :
i) l'application de ladite composition de revêtement particulaire sur ledit sub strat, et
ii) le durcissement de ladite composition de revêtement particulaire.

14. Utilisation d'une composition de revêtement particulaire selon l'une quelconque des revendications 1 à 9 pour revêtir un substrat, de préférence un substrat métallique, par ex. un tuyau métallique.

15. Kit comprenant :
(i) un premier récipient contenant au moins une résine époxy, au moins un agent de durcissement et au moins un promoteur d'adhérence organosilane,
(ii) un deuxième récipient contenant 0,5 à 9,0 % en poids de paillettes de métal sélectionnées parmi des paillettes de zinc, des paillettes d'aluminium, des paillettes d'acier inoxydable, des paillettes de magnésium ou des mélanges d'entre elles, rapporté au poids total du contenu des récipients du kit, et
(iii) des instructions pour mélanger au moins une résine époxy, au moins un agent de durcissement, au moins un promoteur d'adhérence organosilane et des paillettes de métal.
